# EUROPÄISCHE PATENTSCHRIFT

(11) **EP 0 972 480 B1**
(45) Veröffentlichungstag und Bekanntmachung des Hinweises auf die Patenterteilung: **17.10.2001**
(21) Anmeldenummer: 98113090.9
(22) Anmeldetag: 14.07.1998
(51) Int. Cl.: A47J 31/00, A47J 31/46

(54) **Verfahren zum Brühen von Kaffeegetränk und Kaffeemaschine dafür**
Method for brewing coffee drinks and machine therefore
Méthode pour préparer des boissons à café et machine pour le faire

(43) Veröffentlichungstag der Anmeldung: 19.01.2000
(73) Patentinhaber: WMF WÜRTTEMBERGISCHE METALLWARENFABRIK AG, 73309 Geislingen/Steige (DE)
(72) Erfinder: Gussmann, Jochen, 73312 Geislingen/Stg. (DE); Kiefer, Alexander, 73329 Kuchen (DE); Wittlinger, Gerhard, 73312 Geislingen (DE)
(74) Vertreter: Grünecker, Kinkeldey, Stockmair & Schwanhäusser Anwaltssozietät

(56) Entgegenhaltungen:
- EP-A- 0 600 558
- EP-A- 0 862 883
- DE-A- 3 909 626
- PATENT ABSTRACTS OF JAPAN vol. 15, no. 173 (C-0828), 2. Mai 1991 & JP 03 039114 A (MATSUSHITA ELECTRIC IND CO LTD)

## Beschreibung

Die Erfindung bezieht sich auf ein Verfahren zum Brühen von Kaffeegetränk der im Oberbegriff von Anspruch 1, und eine Kaffeemaschine der im Oberbegriff von Anspruch 7 erläuterten Art.

Die Steuerung von automatisch oder hauptsächlich automatisch arbeitenden Kaffeemaschinen erfolgt nach vorgegebenen Parametern, die so festgelegt werden, daß sie eine vorbestimmte und an die Trinkgewohnheiten und den Geschmack des Verbrauchers angepaßte Qualität des Kaffeegetränks sicherstellen. Derartige Parameter sind hauptsächlich die Menge des eingesetzten Kaffeemehls pro Mengeneinheit des Brühwassers, die Brühdauer, d.h. die Zeit, während der das Brühwasser durch das Kaffeemehl läuft, der Ausmahlungsgrad des Kaffeemehls, der vorbestimmte Druck usw. Während durch steuerungstechnische Maßnahmen Parameter wie beispielsweise die Menge des zugeführten Brühwassers, konstant gehalten werden können, ist die Konsistenz und der Ausmahlgrad des Kaffeemehls Schwankungen unterworfen, die sich beispielsweise aus der Änderung der Kaffeesorte, dem Feuchtegehalt des Kaffees, aber auch dem Abnutzungsgrad des der Kaffeemaschine zugeordneten Mahlwerks ergeben können. Es ist deshalb im Stand der Technik bekannt, Kaffeemaschinen nicht nur nach vorgegebenen Parametern zu steuern, sondern eine Möglichkeit zur Fehlerkorrektur vorzusehen.

Ein Verfahren und eine Kaffeemaschine der obenbeschriebenen Art, bei der eine Möglichkeit zur Fehlerkorrektur vorgesehen ist, ist der EP-B-245 197 zu entnehmen. Die bekannte Kaffeemaschine enthält eine Steuereinrichtung, die mit einem Durchflußmengenmesser zum Bestimmen der Durchflußmenge des Brühwassers zur Brüheinrichtung und mit einer Zeitmeßeinrichtung versehen ist, mit der die Zeit gemessen werden kann, in der die vorbestimmte Menge Brühwasser in den Brühraum gefördert wurde. Es wird unterstellt, daß diese vorbestimmte Zeit ein Maß für die Durchflußgeschwindigkeit des Brühwassers durch das Kaffeemehl und somit ein Maß für den Ausmahlgrad und die Menge des Kaffeemehis in der Brüheinrichtung darstellt. Die gemessene Zeit wird mit einer Sollzeit für den Durchlauf der gemessenen Menge an Brühwasser durch diejenige Menge an Kaffeemehl verglichen, die für das vorgewählte Kaffeegetränk vorbestimmt wurde. Weicht die Zeit nach oben oder unten ab, so wird ein Fehler registriert. Durch gleichzeitiges Messen des Kompressionsdruckes des Kaffeemehls, beispielsweise beim Zubereiten von Espresso, wird abgeklärt, ob der Fehler durch zu grob oder zu fein gemahlenes oder ob der Fehler durch eine zu kleine oder zu große Menge Kaffeemehl verursacht wurde. In jedem Falle wird jedoch erst abgewartet, ob sich der Fehler über eine vorbestimmte Anzahl aufeinanderfolgender Brühzyklen wiederholt, und erst dann entweder durch Veränderung des Mahlgrades oder durch Veränderung der Kaffeemehlmenge korrigiert, wenn sich der Fehler in der vorbestimmten Anzahl von Brühzyklen wiederholt hat.

Ein derartiges Vorgehen hat zwei Nachteile. Zum einen wird in den Brühzyklen, die vor der Korrektur liegen, fehlerhaft zubereitetes Getränk ausgegeben. Zum anderen ist eine Veränderung des Mahlgrades oder der Kaffeemehlmenge sicherlich nur dann sinnvoll, wenn der Fehler im Mahlwerk oder in der Dosiereinrichtung liegt. Bei allen anderen Fehlern wird lediglich ein Fehler durch einen anderen Fehler abgeglichen.

Aus der EP-A-600 558 ist eine Kaffeemaschine gemäß dem Oberbegiff der Ansprüche 1 und 7 bekannt, die so betrieben werden soll, dass die Brühzeit für jede eingesetzte Menge Kaffeemehl, sowohl für eine Tassenmenge als auch für eine Kannenmenge, und für jede vorab eingestellte Stärke des Kaffeegetränks gleich sein soll. Zu diesem Zweck wird der Zufluss des Brühwassers zur Brüheinrichtung so gesteuert, dass die vorbestimmte Menge Brühwasser über die gesamte Brühzeit verteilt zugeführt wird. Dies geschieht entweder dadurch, dass die Zuflussgeschwindigkeit des Brühwassers zur Brüheinrichtung, bei konstantem Zufluss, gesteuert wird oder dass das Brühwasser in einzelnen Schwallen über die gesamte Brühzeit verteilt in die Brüheinrichtung eingeleitet wird. Um dieses Verfahren durchführen zu können, müssen auf jeden Fall vorab bestimmte Vorgaben abgespeichert werden, insbesondere muss vorab festgelegt werden, wie viel Wasser bei welcher Geschwindigkeit für welche Menge Kaffeemehl eingeleitet werden. muss.

Hierber erfolgt jedoch die Steuerung vor der Brüheinrichtung, was zu einer weniger feinfühligen und punktgenauen Steuerung führt.

Der Erfindung liegt deshalb die Aufgabe zugrunde, ein Verfahren zum Brühen von Kaffeegetränk und eine Kaffeemaschine mit einer flexibel reagierenden Steuerung bereitzustellen.

Die Aufgabe wird durch das Verfahren gemäß Anspruch 1 und die Kaffeemaschine in Anspruch 7 gelöst.

Die erfindungsgemäße Ausgestaltung basiert auf der Erkenntnis, daß es zur Bereitung eines akzeptablen kaffeegetränkes notwendig ist, eine vorgegebene Soll-Brühzeit einzuhalten. Dies wird erfindungsgemäß dadurch erreicht, daß man die Durchflußgeschwindigkeit des Brühwassers durch das Kaffeemehl so verändert, daß die vorbestimmten Sollwerte der Brühzeit exakt eingehalten werden, auch wenn beispielsweise die Kaffeesorte gewechselt wurde. Durch die erfindungsgemäße Einflußnahme auf die Durchflußgeschwindigkeit kann der vorgegebene Sollwert der Brühzeit direkt im laufenden fehlerhaften Brühzyklus eingehalten werden, so daß zu keiner Zeit ein fehlerhaft zubereitetes Kaffeegetränk ausgegeben wird. Die Einflußnahme auf die Durchflußgeschwindigkeit hat darüber hinaus den weiteren Vorteil, daß dadurch ein vorbestimmter Verlauf der Durchflußgeschwindigkeit abgefahren werden kann, beispielsweise indem man zunächst die Geschwindigkeit verringert, um das Kaffeemehl aufquellen zu lassen, und erst dann die Geschwindigkeit erhöht, um zum Abschluß des Brühvorganges die vorgegebene Kontaktzeit des Brühwassers mit dem Kaffeemehl einzuhalten. Dies erfolgt bei der erfindungsgemäßen Kaffeemaschine durch eine einzeln zu steuernde Brühblende mit eigenem Antrieb, durch die die Durchflußgeschwindigkeit unabhängig von anderen Parametern des Brühzyklus geändert werden kann.

Vorteilhafte Weiterbildungen des erfindungsgemäßen Verfahrens sind den Unteransprüchen 2 bis 6 zu entnehmen, wobei die Maßnahmen nach Anspruch 4 und 5 dort zweckmäßig sind, wo auch eine Fehlerkorrektur stattfinden soll, während die Maßnahme nach Anspruch 6 zweckmäßig ist, wenn zusätzlich oder alternativ zur Fehlerkorrektur die Durchflußgeschwindigkeit während des Brühvorganges verändert werden soll, wobei dies zweckmäßigerweise durch das Steuern gemäß einer abgespeicherten Sollkurve geschieht.

Die Ansprüche 8 bis 13 beschreiben besonders bevorzugte Ausgestaltungen der erfindungsgemäßen Kaffeemaschine, wobei die Ausgestaltung der Brühblende als Drosseldorn gemäß Anspruch 11 besonders bevorzugt ist.

Zwar ist es beispielsweise aus der DE-A-196 29 239 bekannt, den Abflußquerschnitt für das Kaffeegetränk zu drosseln, dies geschieht jedoch bei der bekannten Kaffeemaschine nur in Abhängigkeit vom Kompressionsdruck auf das Kaffeemehl bei der Zubereitung von Espresso. Die bekannte Vorrichtung enthält einen Kolben zum Komprimieren des Kaffeemehls, dessen Stirnseite mit einem Brühsieb versehen ist, das relativ zur Stirnfläche des Kolbens bewegbar ist. An der Stirnfläche des Kolbens sind Nadeln vorgesehen, die in die Öffnungen des Brühsiebs passen und mit den Öffnungen einen Durchflußquerschnitt definieren. Je nach Kompressionsdruck auf das Kaffeemehl tauchen die Nadeln verschieden weit in die Öffnungen ein und drosseln bzw. vergrößern den Durchflußquerschnitt, so daß der zur Zubereitung von Espresso notwendige Druck im Inneren der Brühkammer aufgebaut wird. Es besteht jedoch keine Möglichkeit, die Durchflußgeschwindigkeit bzw. den Durchflußquerschnitt unabhängig vom Kompressionsdruck auf das Kaffeemehl zu steuern.

Ausführungsbeispiele der Erfindung werden nachfolgend anhand der Zeichnungen näher erläutert. Es zeigen:
- Fig. 1: eine schematische Darstellung einer erfindungsgemäß ausgerüsteten Kaffeemaschine,
- Fig. 2: ein vergrößerter Schnitt durch eine Brühblende,
- Fig. 3: den Schnitt III-III durch den Kopf aus Fig. 2,
- Fig. 4: die vergrößerte Darstellung des Details A aus Fig. 2,
- Fig. 5: eine Darstellung ähnlich Fig. 2 eines weiteren Ausführungsbeispiels einer Brühblende,
- Fig. 6: den Schnitt VI-VI durch den Kopf aus Fig. 5, und
- Fig. 7: das herausvergrößerte Detail B aus Fig. 5.

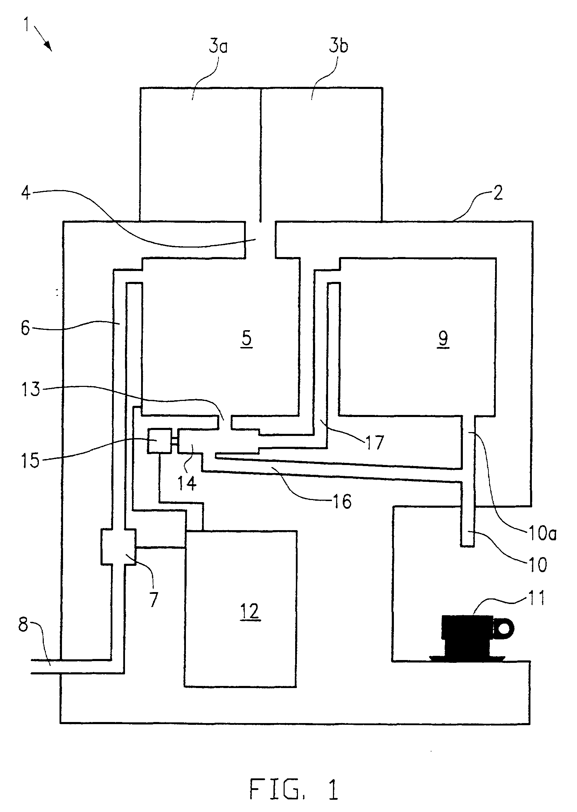

Aus Fig. 1 sind in schematischer Darstellung die wesentlichsten Bestandteile einer üblichen Kaffeemaschine 1 dargestellt, mit der sowohl Filterkaffee als auch Espresso zubereitet werden kann. Die Begriffe "Filterkaffee" und "Espresso" sind nur beispielhaft für die beiden Gruppen unterschiedlich zuzubereitender Kaffeegetränke gewählt, wobei beispielsweise der Begriff "Espresso" auch Kaffee-Creme usw. umfassen kann.

Die Kaffeemaschine 1 enthält ein Gehäuse 2, auf dem einer oder bevorzugt zwei Vorratsbehälter 3a, 3b zum Aufnehmen unterschiedlicher Kaffeesorten angeordnet sind Die Vorratsbehälters 3a, 3b sind über einen Beschickungskanal 4, sowie gegebenenfalls über ein integriertes, nicht dargestelltes Mahlwerk, dessen Konstruktion dem Fachmann jedoch geläufig ist, mit einer Brüheinrichtung 5 im Inneren des Gehäuses 2 verbunden. Die Brüheinrichtung 5 enthält entweder zwei getrennte Brüheinrichtungen für Filterkaffee und Espresso oder eine Brüheinrichtung mit verschiedenen Brühstellungen für die beiden Kaffeegetränke. In die Brüheinrichtung 5 mündet eine Leitung 6, in der ein Durchflußmengenmesser 7 angeordnet ist. Die Leitung 6 wird über eine Zufuhrleitung 8 mit Wasser versorgt. An irgendeiner Stelle zwischen der Zufuhrleitung 8 und der Brüheinrichtung 5 ist einer der üblichen, hier ebenfalls nicht dargestellten Heißwasserbereiter, wie beispielsweise ein Durchlauferhitzer oder ein Boiler angeordnet.

Im Inneren des Gehäuses 2 ist weiterhin ein Vorratsbehälter 9 für Kaffeegetränk vorgesehen, der über eine Ablaufleitung 10a mit einem Getränkeauslauf 10 verbunden ist, der aus dem Gehäuse 2 herausführt und so angeordnet ist, daß ein Gefäß 11, dargestellt ist eine Tasse, zum Befüllen untergestellt werden kann.

An der Außenseite des Gehäuses 2 sind weiterhin die üblichen Bedienungselement und Anzeigen angeordnet, die mit einer Steuerung 12 im Inneren des Gehäuses verbunden sind, um die gewünschten Brüh- und Ausgabevorgänge einleiten und durchführen zu lassen.

Die Brüheinrichtung 5 ist über eine Ablaufleitung 13 mit einer Umschalteinrichtung 14 verbunden, die durch einen Motor 15 angetrieben wird. Die Umschalteinrichtung 14 ist über eine erste Ablaufleitung 16 mit dem Getränkeauslauf 10 und über eine zweite Ablaufleitung 17 mit dem Vorratsbehälter 9 verbunden.

Die Umschalteinrichtung 14 ist im Prinzip von derjenigen Art, wie sie in der nicht vorveröffentlichten europäischen Patentanmeldung 97 103 901.1 beschrieben ist. Für nähere Einzelheiten der Konstruktion und Funktion wird deshalb auf diese Anmeldung verwiesen.

Die Umschalteinrichtung 14 dient hauptsächlich dem Zweck, einerseits das Kaffeegetränk aus der Brüheinrichtung 5 und der Leitung 13 entweder über die Leitung 17 zum Vorratsbehälter 9 oder über die Leitung 16 zum Getränkeauslauf 10 zu leiten. Neben dieser Funktion als 2/3-Wegeventil dient die Umschalteinrichtung 14 weiterhin der Erzeugung einer sogenannten Crema bei der Zubereitung von Espresso oder einem ähnliche Kaffeegetränk durch die Ausbildung eines schmalen Ringspaltes im Strömungsweg des Espressos.

Die Umschalteinrichtung 14 enthält ein im wesentlichen zylindrisches Gehäuse 18 mit einer Innenbohrung 18a, das mit im wesentlichen horizontaler Mittelachse liegend angeordnet ist. In das Gehäuse 18 mündet von oben im wesentlichen radial die Zulaufleitung 13 mit einer Zulauföffnung 13a ein. An der gegenüberliegenden, unteren Seite des Gehäuses 18 und entlang der Achse der Innenbohrung 18a nach links versetzt, mündet die Ablaufleitung 16 mit einer Ablauföffnung 16a ebenfalls radial aus. An der dem Motor 15 (Fig. 1) abgewandten Stirnseite mündet die zweite Ablaufleitung 17 zum Vorratsbehälter 9 mit ihrer Ablauföffnung 17a aus.

Im Inneren des Gehäuses 18 ist eine Brühblende in Form eines im wesentlichen zylindrischen Ventilstößels 19 angeordnet, der über den Motor 15 in Axialrichtung zur Mittelachse der Innenbohrung 18a verschiebbar ist. Der Ventilstößel 19 weist einen als Drosselelement ausgebildeten Kopf 20 und einen Schaft 21 auf. Der Kopf 20 ist in der Nähe seines freien Endes mit einem Dichtungsring 22 versehen, mit dem er an der Innenwand der Bohrung 18a abdichtend anliegt, wobei an denjenigen Stellen der Innenwand, an der bei einer bestimmten Position des Ventilstößels 19 eine Abdichtung gewünscht ist, ein Dichtvorsprung vorgesehen werden kann, wie dies beispielsweise anhand des Dichtvorsprunges 23 zwischen den beiden Öffnungen 13a und 16a gezeigt ist. Im Bereich der Zulauföffnung 13a weist die Innenwand der Bohrung 18a weiterhin eine nutartige Vertiefung 24 auf, die sich an der Stelle der Zulauföffnung 13a über den gesamten Umfang der Innenwand erstreckt und als Verteilnut für den durch die Öffnung 13a zufließenden Espresso dient.

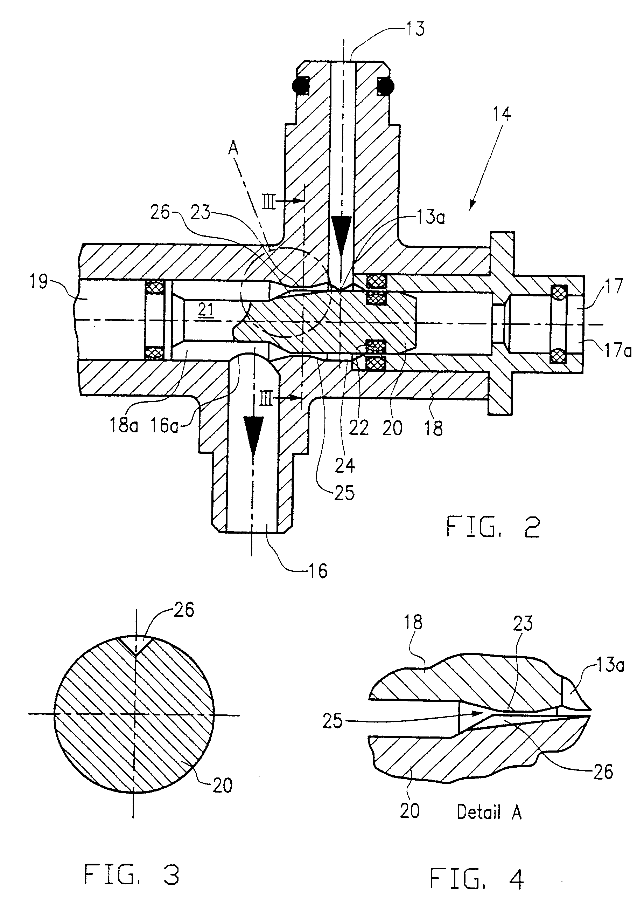

Zwischen dem Dichtungsring 22 und dem Schaft 21, d.h. auf der dem freien Ende des Kopfes 20 abgewandten Seite des Dichtungsringes 22, ist der Außendurchmesser des Kopfes 20 geringer als der Innendurchmesser des Gehäuses 18 und bildet somit einen Ringspalt 25 als Strömungsweg für den Espresso zwischen der Öffnung 13a und der Öffnung 16a, wenn der Ventilkopf 20 durch den Motor 15 in die in Fig. 2 gezeigte Position verschoben wurde, in der die Verbindung zwischen den Öffnungen 13a und 16a offen, die Verbindung zwischen den Öffnungen 13a und 17a geschlossen ist.

Im Bereich des Ringspaltes 25 ist der Kopf 20 mit einer Ausnehmung 26 versehen, die sich bevorzugt an der der Öffnung 13a zugewandten Oberseite des Kopfes 20 befindet, axial verläuft und als Kerbe mit dreieckigem Querschnitt ausgebildet ist, wobei sich der Querschnitt der Kerbe 26 von der dem Dichtring 22 zugewandten Seite bis zum Schaft 21 stufenlos konisch vergrößert.

Die Querschnittsfläche der Ausnehmung 26 addiert sich zur Querschnittsfläche des Ringspaltes 25, so daß der Gesamtströmungsquerschnitt des Kaffeegetränks in Richtung auf den Schaft 21 stufenlos vergrößert wird, was zu unterschiedlichen Strömungsgeschwindigkeiten des Kaffeegetränks führt, je nachdem welcher Bereich der Ausnehmung 26 sich unterhalb der Zulauföffnung 13a befindet, d.h. je nachdem, wie weit der Kopf 20 durch den Motor 15 in Fig. 2 nach rechts oder links verschoben wurde.

Die Form und Größe der Ausnehmung 26, insbesondere der Verlauf der Änderung ihres Querschnittes und ihre axiale Länge bezüglich des Verschiebungsweges des Kopfes 20 durch den Motor 15 wird gemäß den speziellen Anforderungen der mit der Kaffeemaschine 1 herzustellenden Kaffeegetränke bestimmt.

Die Kaffeemaschine 1 wird wie folgt betrieben:

In der Steuerung 12 werden die speziellen Parameter für jede Art des herzustellenden Kaffeegetränks und für jede Ausgabemenge gespeichert. Darüber hinaus kann die Steuerung 12 auch eine (nicht-lineare) Sollkurve für den Verlauf des Brühvorganges, insbesondere den Druckverlauf bei Espressobrühung, speichern. Wählt ein Benutzer beispielsweise die Zubereitung einer Tasse Espresso, so sorgt die Steuerung 12 dafür, daß die vorbestimmte Menge Kaffeemehl, bevorzugte frisch gemahlen, aus dem entsprechenden Vorratsbehälter 3a, 3b in die Brüheinrichtung 5 gelangt und dort durch die üblichen Kolbeneinrichtungen oder dgl. mit einem vorbestimmten Druck komprimiert wird. Dann sorgt die Steuerung 12 dafür, daß die vorbestimmte Menge Brühwasser, ermittelt durch den Durchflußmengenmesser 7, in die Brüheinrichtung 5 eingeleitet wird. Die Steuerung 12 sorgt ferner dafür, daß der Kopf 20 durch den Motor 15 in eine vorbestimmte Stellung im Inneren des Gehäuses 18 verschoben wird. Diese vorbestimmte Stellung bei Espressobrühung ist jede Stellung, in der der Kopf 20 die Verbindung zwischen der Zulauföffnung 13a und der Ablauföffnung 17a zum Vorratsbehälter 9 blockiert und die Zulauföffnung 13 mit dem Ringspalt 25 verbindet. In der in Fig. 2 dargestellten Stellung des Kopfes 20 ist eine maximale Drosselung des Strömungsweges für den Espresso verwirklicht, da die Öffnung 13a außerhalb der Ausnehmung 26 nur mit dem Ringspalt 25 in Verbindung steht.

Soll im Verlauf des Brühvorganges die Strömungsgeschwindigkeit gemäß der abgespeicherten Sollkurve erhöht werden, so verschiebt der Motor 15 den Kopf 20 nach rechts, so daß der Strömungsquerschnitt für den Espresso durch die zusätzliche Kapazität der Ausnehmung 26 mehr und mehr vergrößert wird, so daß der Espresso schneller ablaufen kann.

Während das Brühwasser durch die Brüheinrichtung 5 durchläuft, überprüft die Steuerung 12 in vorbestimmten Zeitintervallen das durchgelaufene Wasser am Durchflußmengenmesser 7 und vergleicht die festgestellten Werte mit Sollwerten. Stellt die Steuerung 12 fest, daß zu wenig oder zu viel Brühwasser für das bestimmte Meßintervalll durchgeflossen ist, so besteht die Möglichkeit einer Fehlerkorrektur, indem durch den Motor 15 der Kopf 20 verschoben wird, so daß der Querschnitt des Strömungsweges vergrößert bzw. verkleinert und die Durchflußgeschwindigkeit erhöht oder verringert wird, so daß im Endeffekt die vorbestimmte Brühzeit trotzdem eingehalten wird. Diese Möglichkeit der Fehlerkorrektur kann die Steuerung gemäß der Sollwertkurve überlagern oder kann vorgesehen werden, wenn der Strömungsquerschnitt durch vorab festgelegte Stellungen des Kopfes 20 bestimmt wird.

Im Ausführungsbeispiel gemäß Fig. 2 ist eine Veränderung des Strömungsquerschnittes nur für die Herstellung von Espresso gezeigt. Wird die Zubereitung von Filterkaffee gewählt, so wird der Kopf 20 so weit nach rechts verschoben, daß die Öffnung 13a über den Bereich des Schaftes 21 mit der Öffnung 16a in Verbindung steht, wenn Kaffee aus dem Getränkeauslauf 10 ausgegeben werden soll.

Soll der Vorratsbehälter 9 gefüllt werden, so wird der Kopf 20 nach links zurückgezogen, so daß die Dichtung 22 mit dem Dichtvorsprung 23in Eingriff kommt und die Verbindung zwischen der Öffnung 13a und der Öffnung 16a schließt, sowie die Verbindung 13a mit der Öffnung 17a öffnet.

Soll jedoch eine vergleichbare Veränderung der Durchflußgeschwindigkeit auch beim Zubereiten von Filterkaffee verwirklicht werden, so könnte dies beispielsweise geschehen, indem man den Querschnitt des Schaftes 21, in Fig. 2 nach links, d.h. vom Kopf 20 weg, sich konisch verjüngen läßt. Gleichermaßen kann der Kopf 20 im Bereich jenseits der Dichtringe 22 stärker konisch verjüngt werden, als dies in der Fig. 2 gezeigt ist, so daß eine entsprechende Regelung der Durchflußgeschwindigkeit auch dann möglich ist, wenn der Vorratsbehälter 9 befüllt wird.

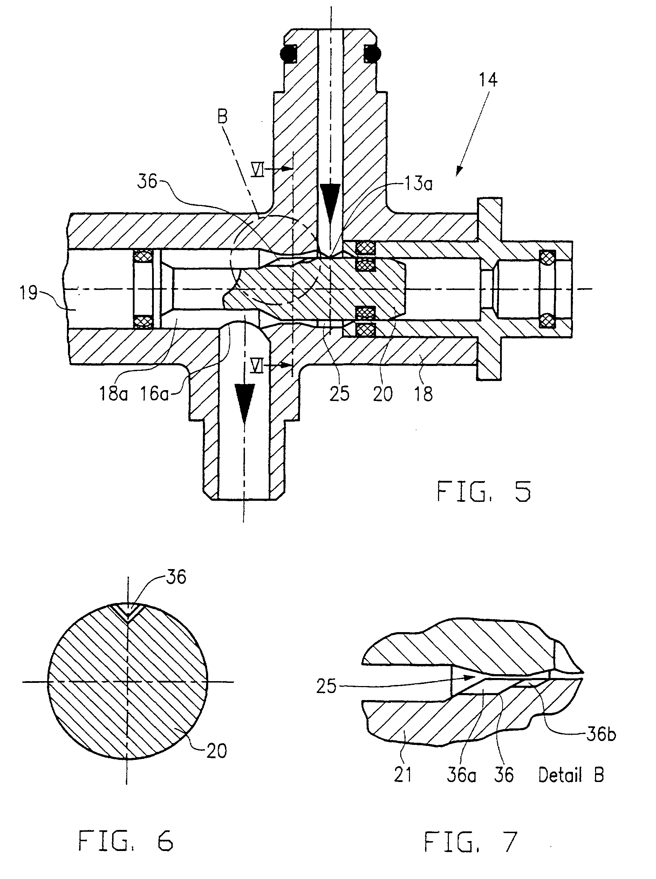

Die Umschalteinrichtung 14 gemäß den Fig. 5 bis 7 unterscheidet sich von der Umschalteinrichtung 14 gemäß den Fig. 2 bis 4 lediglich durch eine stufenweise Verstellbarkeit des Durchflußquerschnittes bzw. der Durchflußgeschwindigkeit, wobei gleiche bzw. vergleichbare Bauteile mit den gleichen Bezugszeichen gekennzeichnet und nicht nochmals erläutert werden. In diesem Ausführungsbeispiel enthält der Kopf 20 eine Ausnehmung 36, die, wie die Ausnehmung 26, als axial verlaufende Kerbe ausgebildet ist, jedoch nur zwei unterschiedliche Querschnitte, d.h. einen größeren Querschnitt 36a an der Ausmündung zum Schaft 21 und einen kleineren Querschnitt 36b, der in Richtung auf die Dichtung 22 auf Null zurückgeht, aufweist. Mit dieser Ausnehmung 36 sind die gleichen Funktionen und Wirkungsweisen verbunden, wie anhand der Fig. 2 bis 4 beschrieben, mit dem Unterschied, daß der Strömungsquerschnitt und somit die Durchflußgeschwindigkeit nur in den beiden Stufen 36a und 36b, die bevorzugt die gleiche axiale Länge haben, verändert werden kann.

Die Erfindung ist nicht auf die beschriebenen und gezeichneten Ausführungsbeispiele beschränkt. So kann der Durchflußquerschnitt auch mit einer Brühblende zum Quetschen der Ablaufleitung oder mit einer Ringblende oder dgl. verändert werden. Die Brühblende muß nicht unbedingt in eine Umschalteinrichtung integriert werden, sondem kann als gesondertes Bauteil vorgesehen sein. Zum Antrieb des Ventilstößels kann jeder geeignete Antrieb verwendet werden.

## Patentansprüche

1. Verfahren zum Brühen von Kaffeegetränk in einer Kaffeemaschine (1) nach vorgegebenen Parametern, bei dem auf Anforderung eine Sollmenge Brühwasser innerhalb einer Soll-Brühzeit durch eine Sollmenge Kaffeemehl geleitet wird, wobei während des Einleitens der Sollmenge Brühwasser und innerhalb der Soll-Brühzeit die Durchflussgeschwindigkeit des Brühwassers durch das Kaffeemehl, unabhängig von anderen Parametern, verändert wird, **dadurch gekennzeichnet, daß** die Durchflussgeschwindigkeit durch ein Drosseln oder Vergrößern des Durchflussquerschnitts des ablaufenden Kaffeegetränks verändert wird.

2. Verfahren nach Anspruch 1, **dadurch gekennzeichnet, dass** die Durchflussgeschwindigkeit durch ein stufenloses Drosseln oder Vergrößern des Durchflussquerschnittes verändert wird.

3. Verfahren nach Anspruch 1, **dadurch gekennzeichnet, dass** die Durchflussgeschwindigkeit durch ein stufenweises Drosseln oder Vergrößern des Durchflussquerschnittes verändert wird.

4. Verfahren nach einem der Ansprüche 1 bis 3, **dadurch gekennzeichnet, dass** die Durchflussgeschwindigkeit überwacht und bei einem Abweichen von einem Sollwert verändert wird.

5. Verfahren nach Anspruch 4, **dadurch gekennzeichnet, dass** zum Überwachen der Durchflussgeschwindigkeit in vorbestimmten Zeitintervallen die Menge des durchgeflossenen Brühwassers festgestellt wird.

6. Verfahren nach einem der Ansprüche 1 bis 5, **dadurch gekennzeichnet, dass** die Durchflussgeschwindigkeit entsprechend einer vorgegebenen Sollkurve innerhalb der Soll-Brühzeit verändert wird.

7. Kaffeemaschine (1) zum Brühen von Kaffeegetränk aus Kaffeemehl und Brühwasser, nach dem Verfahren nach einem der Ansprüche 1 bis 6 mit einer Brüheinrichtung (5) und einer Steuereinrichtung (12) für den Brühvorgang nach vorgegebenen Sollwerten der Brühzeit und der Mengen an Kaffeemehl und Brühwasser, sowie eine im Strömungsweg angeordnete, gesteuerte Brühblende (19) mit eigenem Antrieb (15) zum Verändern der Durchflussgeschwindigkeit des Brühwassers durch das Kaffeemehl innerhalb der Soll-Brühzeit und unabhängig von anderen Parametern, **dadurch gekennzeichnet, daß** die Brühblende (19) im Strömungsweg der Brüheinrichtung (5) nachgeordnet ist

8. Kaffeemaschine nach Anspruch 7, **dadurch gekennzeichnet, dass** die Brühblende (19) ein Drosselelement (20, 26) zum stufenlosen Verändern ihres Durchflussquerschnittes aufweist.

9. Kaffeemaschine nach Anspruch 7, **dadurch gekennzeichnet, dass** die Brühblende (19) ein Drosselelement (20, 36) zum stufenweisen Verändern ihres Durchflussquerschnittes aufweist.

10. Kaffeemaschine nach einem der Ansprüche 7 bis 9, **dadurch gekennzeichnet, dass** die Brühblende (19) einen durch den Antrieb (15) in einer Bohrung (18a) axial verschiebbaren Kopf (20) enthält, wobei zwischen dem Außenumfang des Kopfes (20) und dem Innenumfang der Bohrung (18a) ein Strömungsquerschnitt (25, 26, 36) ausgebildet ist.

11. Kaffeemaschine nach Anspruch 10, **dadurch gekennzeichnet, dass** der Strömungsquerschnitt durch eine zwischen dem Kopf (20) und der Bohrung angeordnete Ausnehmung (26, 36) definiert ist.

12. Kaffeemaschine nach Anspruch 11, **dadurch gekennzeichnet, dass** die Ausnehmung (26, 36) als axial im Kopf (20) angeordnete Kerbe mit einem im wesentlichen dreieckigen Querschnitt ausgebildet ist.

13. Kaffeemaschine nach einem der Ansprüche 7 bis 12, **dadurch gekennzeichnet, dass** bei einer Kaffeemaschine zum Brühen von Filterkaffee und Espresso die Brühblende (19) in eine Umschalteinrichtung (14) zum Wechsel zwischen Filterkaffee und Espresso integriert ist.

## Claims

1. Method for brewing coffee beverage in a coffee machine (1) according to preset parameters, in which on request a nominal quantity of brewing water is passed within a nominal brewing time through a nominal quantity of ground coffee, wherein during introduction of the nominal quantity of brewing water and within the nominal brewing time the throughflow rate of the brewing water through the ground coffee is varied independently of other parameters, **characterised in that** the throughflow rate is varied by throttling or increasing the throughflow cross-section of the coffee beverage running off.

2. Method according to claim 1, **characterised in that** the throughflow rate is varied by throttling or increasing the throughflow cross-section infinitely variably.

3. Method according to claim 1, **characterised in that** the throughflow rate is varied by throttling or increasing the throughflow cross-section stepwise.

4. Method according to any of claims 1 to 3, **characterised in that** the throughflow rate is monitored and varied if it differs from a nominal value.

5. Method according to claim 4, **characterised in that** for monitoring the throughflow rate at predetermined intervals of time the quantity of brewing water which has flowed through is detected.

6. Method according to any of claims 1 to 5, **characterised in that** the throughflow rate is varied according to a preset nominal curve within the nominal brewing time.

7. Coffee machine (1) for brewing coffee beverage from ground coffee and brewing water, by the method according to any of claims 1 to 6, with a brewing device (5) and a control device (12) for the brewing process according to preset nominal values of brewing time and of quantities of ground coffee and brewing water, as well as a controlled brewing diaphragm (19) arranged in the flow path with its own drive (15) for varying the throughflow rate of the brewing water through the ground coffee within the nominal brewing time and independently of other parameters, **characterised in that** the brewing diaphragm (19) is arranged behind the brewing device (5) in the flow path.

8. Coffee machine according to claim 7, **characterised in that** the brewing diaphragm (19) comprises a throttle element (20, 26) for varying its throughflow cross-section infinitely variably.

9. Coffee machine according to claim 7, **characterised in that** the brewing diaphragm (19) comprises a throttle element (20, 36) for varying its throughflow cross-section stepwise.

10. Coffee machine according to any of claims 7 to 9, **characterised in that** the brewing diaphragm (19) contains a head (20) which is axially displaceable in a bore (18a) by the drive (15), wherein between the outer circumference of the head (20) and the inner circumference of the bore (18a) is formed a flow cross-section (25, 26, 36).

11. Coffee machine according to claim 10, **characterised in that** the flow cross-section is defined by a recess (26, 36) arranged between the head (20) and the bore.

12. Coffee machine according to claim 11, **characterised in that** the recess (26, 36) is constructed as a notch of essentially triangular cross-section arranged axially in the head (20).

13. Coffee machine according to any of claims 7 to 12, **characterised in that**, in a coffee machine for brewing filter coffee and espresso, the brewing diaphragm (19) is integrated in a switch-over device (14) for changing between filter coffee and espresso.

## Revendications

1. Procédé pour préparer par infusion ou percolation des boissons à base de café dans une machine à café (1), selon des paramètres prédéterminés, dans laquelle à la demande une quantité de consigne d'eau d'infusion ou de percolation est passée, pendant un laps de temps d'infusion ou de percolation de consigne, à travers une quantité de consigne de poudre de café, où pendant l'introduction de la quantité de consigne d'infusion ou de percolation dans les limites du laps de temps d'infusion ou de percolation de consigne, la vitesse de traversée dans la poudre de café par l'écoulement d'eau d'infusion ou de percolation est modifiée indépendamment d'autres paramètres, **caractérisé en ce que** la vitesse de traversée par l'écoulement est modifiée par le biais d'un étranglement ou d'un agrandissement de l'aire de la section transversale de passage d'écoulement de la boisson à base de café s'écoulant.

2. Procédé selon la revendication 1, **caractérisé en ce que** la vitesse de passage d'écoulement est modifiée par le biais d'un étranglement ou d'un agrandissement, progressif continu, de l'aire de la section de passage offerte à l'écoulement.

3. Procédé selon la revendication 1, **caractérisé en ce que** la vitesse de passage d'écoulement est modifiée par le biais d'un étranglement ou d'un agrandissement, effectué par degrés, de l'aire de la section de passage offerte à l'écoulement.

4. Procédé selon l'une des revendications 1 à 3, **caractérisé en ce que** la vitesse de traversée de l'écoulement est surveillée et modifiée, en cas d'écart par rapport à une valeur de consigne.

5. Procédé selon la revendication 4, **caractérisé en ce que** la quantité d'eau d'infusion ou de percolation passée est appréhendée à des intervalles de temps prédéterminés, en vue de surveiller la vitesse de traversée par l'écoulement.

6. Procédé selon l'une des revendications 1 à 5, **caractérisé en ce que** la vitesse de traversée de l'écoulement est modifiée, de manière correspondante à une courbe de consigne prédéterminée, dans les limites d'un laps de temps d'infusion ou de percolation de consigne.

7. Machine à café (1) pour la préparation d'une boisson à base de café, à partir de poudre de café et d'eau d'infusion ou de percolation, d'après le procédé selon l'une des revendications 1 à 6, avec un dispositif d'infusion ou de percolation (5) et un dispositif de commande (12) du processus d'infusion ou de percolation, selon des valeurs de consigne prédéterminées concernant le temps d'infusion ou de percolation et les quantités de poudre de café et d'eau d'infusion ou de percolation, ainsi qu'un diaphragme restricteur d'infusion ou de percolation (19) commandé, disposé dans la voie d'écoulement, avec un entraînement (15) propre pour modifier la vitesse de traversée de l'écoulement d'eau d'infusion ou de percolation dans la poudre de café, dans les limites du laps de temps d'infusion ou de percolation de consigne et indépendamment d'autres paramètres, **caractérisé en ce que** le diaphragme restricteur d'infusion ou de percolation (19) est disposé en aval du dispositif d'infusion ou de percolation (5) dans la voie d'écoulement.

8. Machine à café selon la revendication 7, **caractérisée en ce que** le diaphragme restricteur d'infusion ou de percolation (19) présente un élément d'étranglement (20, 26), pour modifier de façon progressive et continue l'aire de sa section de passage de l'écoulement.

9. Machine à café selon la revendication 7, **caractérisée en ce que** le diaphragme restricteur d'infusion ou de percolation (19) présente un élément d'étranglement (20, 36), pour modifier par degrés l'aire de sa section de passage de l'écoulement.

10. Machine à café selon l'une des revendications 1 à 7, **caractérisée en ce que** le diaphragme restricteur d'infusion ou de percolation (19) contient une tête (20), déplaçable axialement dans un passage (18) au moyen de l'entraînement (15), une section de passage d'écoulement (25, 26, 36) étant réalisée entre la périphérie extérieure de la tête (20) et la périphérie intérieure du passage (18a).

11. Machine à café selon la revendication 10, **caractérisée en ce que** l'aire de la section transversale offerte à l'écoulement est définie par un évidement (26, 36) disposé entre la tête (20) et le perçage.

12. Machine à café selon la revendication 11, **caractérisée en ce que** l'évidement (26, 36) est réalisé sous la forme d'entailles disposées axialement dans la tête (20), et ayant une section transversale pratiquement triangulaire.

13. Machine à café selon l'une des revendications 7 à 12, **caractérisée en ce que**, dans une machine à café prévue pour produire, par infusion ou percolation , un café filtre et un expresso le diaphragme restricteur d'infusion ou de percolation (19) est intégré dans un dispositif de commutation (14), servant à la commutation entre le café filtre et l'expresso.
